Europäisches Patentamt

European Patent Office

Office européen des brevets

(11) Numéro de publication: **0 354 090**
**A2**

## (12) DEMANDE DE BREVET EUROPEEN

(21) Numéro de dépôt: **89402067.6**

(22) Date de dépôt: **20.07.89**

(51) Int. Cl.⁵: **G 01 N 29/04**

(30) Priorité: **05.08.88 FR 8810625**

(43) Date de publication de la demande:
**07.02.90 Bulletin 90/06**

(84) Etats contractants désignés:
**BE CH DE ES LI SE**

(71) Demandeur: **FRAMATOME**
**Tour Fiat 1, Place de la Coupole**
**F-92400 Courbevoie (FR)**

(72) Inventeur: **Dugue, Christian**
**Montceaux-Ragny**
**F-71240 Sennecey Le Grand (FR)**

(74) Mandataire: **Bouget, Lucien et al**
**Cabinet Lavoix 2, Place d'Estienne d'Orves**
**F-75441 Paris Cédex 09 (FR)**

(54) **Dispositif de contrôle non destructif par ultrasons d'une soudure circulaire à l'intérieur d'un tube de générateur de vapeur.**

(57) Le dispositif comporte un conduit souple (15) ayant une de ses extrémités dans une zone (20) située à l'extérieur de la boîte à eau (6) et son autre extrémité reliée à un guide-sonde tubulaire (16) porté par un moyen de manutention (13, 14) disposé dans la boîte à eau (6). Une gaine (21) est montée glissante à l'intérieur du conduit souple (15) et porte à l'une de ses extrémités une butée et une douille de guidage de la sonde à ultrasons(18). Un flexible (22) est monté rotatif autour de son axe à l'intérieur de la gaine (21). Ce flexible (22) est solidaire à l'une de ses extrémités d'une pièce profilée d'entraînement en rotation et reliée à son autre extrémité, à l'extérieur de la boîte à eau (6) à un moyen d'entraînée en rotation (24). Le support de la sonde (18) comporte une partie filetée engagée dans une partie taraudée de la douille de guidage et peut être entraînement en rotation par une pièce profilée solidaire de l'extrémité du flexible (22). Le support de la sonde (18) est ainsi entraîné en rotation et en translation axiale dans un mouvement hélicoïdal.

FIG.2

EP 0 354 090 A2

**Description**

**Dispositif de contrôle non destructif par ultrasons d'une soudure circulaire à l'intérieur d'un tube de générateur de vapeur**

L'invention concerne un dispositif de contrôle non destructif par ultrasons d'une soudure circulaire à l'intérieur d'un tube de générateur de vapeur d'un réacteur nucléaire à eau sous pression.

Les générateurs de vapeur des réacteurs nucléaires à eau sous pression comportent un faisceau de tubes pliés en U dont les extrémités sont serties dans des trous traversant une plaque tubulaire. Les tubes affleurent sur l'une des faces de la plaque tubulaire constituant sa face d'entrée. Une boîte à eau est délimitée, dans la partie inférieure du générateur de vapeur, par la plaque tubulaire dont la face d'entrée constitue la paroi supérieure de la boîte à eau.

L'eau sous pression constituant le fluide de refroidissement du réacteur circule dans les tubes du faisceau qui assurent le contact thermique, dans la partie du générateur de vapeur située au-dessus de la plaque tubulaire, entre l'eau de refroidissement sous pression et de l'eau d'alimentation en contact avec la surface extérieure des tubes. La chaleur de l'eau de refroidissement du réacteur assure ainsi l'échauffement et la vaporisation de l'eau d'alimentation.

Les tubes du faisceau constituent une partie de la barrière séparant l'eau primaire de refroidissement du réacteur de l'eau d'alimentation. Il est donc nécessaire de contrôler et de maintenir l'intégrité de la paroi des tubes, pour empêcher toute fuite d'eau sous pression tenant en suspension des corps radio-actifs, dans la partie secondaire du générateur de vapeur renfermant l'eau alimentaire.

Les générateurs de vapeur des réacteurs nucléaires à eau sous pression sont destinés à fonctionner pendant de très longues périodes pendant lesquelles leurs tubes peuvent subir certaines détériora tions, par exemple sous l'effet de la corrosion par l'eau primaire ou par l'eau d'alimentation.

Des fissures traversant la paroi des tubes peuvent apparaître dans certaines zones et en particulier au voisinage de la face de sortie de la plaque tubulaire. De telles fissures se traduisent par des fuites souvent limitées mais gênantes d'eau primaire dans l'eau d'alimentation.

Lorsque de telles fuites ont été détectées, on effectue, pendant une période d'arrêt pour entretien du réacteur, des réparations des tubes des générateurs de vapeur présentant des fuites. Ces réparations peuvent être effectuées par une opération de manchonnage de la zone du tube fissurée. Une telle opération consiste à fixer un manchon à l'intérieur du tube, dans la zone présentant des fissures. Le tube est dudgeonné à chacune de ses extrémités, de part et d'autre de la zone fissurée.

Pour assurer une parfaite étanchéité de la liaison entre le manchon et le tube, on effectue une soudure circulaire ou voisinage de chacune des extrémités du manchon, pour réaliser une liaison de type métallurgique entre le manchon et le tube. Cette soudure est effectuée de préférence, par le procédé TIG, c'est-à-dire par un procédé utilisant une électrode de tungstène et une atmosphère de gaz inerte dans la zone de soudage.

La qualité et l'étanchéité de la jonction dépendent de la qualité de la soudure réalisée, si bien qu'il est préférable de contrôler soigneusement l'état des soudures de jonction entre les manchons et les tubes, avant de remettre le générateur de vapeur en fonctionnement.

L'intérieur des tubes du générateur de vapeur et les parois de la boîte à eau sont assez fortement contaminées après un certain temps de fonctionnement du générateur de vapeur, si bien que les opérations de manchonnage et de soudage final des manchons requièrent des précautions pour éviter d'exposer le personnel effectuant les réparations, à des doses de radio-activité importantes.

On a conçu des outillages pour réaliser le manchonnage et le soudage final des manchons dans des tubes de générateur de vapeur contaminés.

En revanche, on ne connaît pas de dispositif de contrôle permettant de vérifier l'état des soudures effectuées sur les manchons et évitant une contamination du personnel utilisé pour ces contrôles.

On connaît des dispositifs de manutention qui peuvent être placés à l'intérieur de la boîte à eau d'un générateur de vapeur et qui permettent d'introduire un outil ou une sonde de contrôle dans un tube quelconque du faisceau, par son extrémité affleurant la face d'entrée de la plaque tubulaire.

Cependant, on ne connaît pas de dispositif permettant de mettre en place et d'utiliser une sonde de contrôle non destructif de soudure telle qu'une sonde à ultrasons, pour effectuer le balayage d'une zone circulaire de faible longueur, à l'intérieur d'un tube.

Le but de l'invention est de proposer un dispositif de contrôle non destructif par ultrasons d'une soudure circulaire à l'intérieur d'un tube de générateur de vapeur d'un réacteur nucléaire à eau sous pression comportant un faisceau de tubes dont les extrémités sont serties dans des trous traversant une plaque tubulaire ayant une face d'entrée sur laquelle affleurent les extrémités des tubes et constituant une paroi d'une boîte à eau recevant l'eau de refroidissement du réacteur, le contrôle étant effectué en utilisant un moyen de détection comportant au moins une sonde à ultrasons introduite dans le tube depuis la boîte à eau, grâce à un moyen de manutention disposé dans la boîte à eau et permettant de placer la sonde dans un tube quelconque du faisceau, ce dispositif permettant d'effectuer un contrôle efficace de la soudure, sans exposer le personnel chargé du contrôle à la radio-activité régnant dans la boîte à eau du générateur de vapeur.

Dans ce but, le dispositif suivant l'invention comporte :

- un conduit souple ayant une de ses extrémités dans une zone située à l'extérieur de la boîte à eau et son autre extrémité reliée à un guide sonde tubulaire porté par le moyen de manutention.

- une gaine montée à l'intérieur du conduit souple de manière glissante, portant, à l'une de ses extrémités, une butée et une douille de guidage de la sonde et ayant son autre extrémité à l'extérieur de la boîte à eau, ressortant par l'extrémité du conduit souple,

- un flexible monté rotatif autour de son axe, à l'intérieur de la gaine, solidaire à l'une de ses extrémités d'une pièce profilée d'entraînement en rotation et relié, à son autre extrémité, à l'extérieur de la boîte à eau, à un moyen d'entraînement en rotation autour de son axe,

- un support de sonde comportant une partie filetée engagée dans une partie taraudée de la douille de guidage et une lumière d'une forme correspondant à la section profilée de la pièce d'entraînement en rotation, pour l'entraînement du support de sonde en rota tion et en translation axiale, par mise en rotation du flexible,

- et des moyens d'alimentation en liquide de couplage de la zone du tube à contrôler et de récupération du liquide de couplage.

Afin de bien faire comprendre l'invention, on va maintenant décrire, à titre d'exemple non limitatif, en se référant aux figures jointes en annexe, un mode de réalisation d'un dispositif de contrôle non destructif suivant l'invention et son utilisation pour le contrôle de soudure circulaire à l'intérieur de tubes manchonnés d'un générateur de vapeur.

La figure 1 est une vue en élévation avec coupe partielle d'un générateur de vapeur d'un réacteur nucléaire à eau sous pression.

La figure 2 est une vue schématique en élévation et en coupe d'un dispositif de contrôle non destructif de soudures circulaires à l'intérieur de tubes d'un générateur de vapeur.

La figure 3 est une vue à plus grande échelle de la partie du dispositif représentée sur la figure 2 placé à l'intérieur du générateur de vapeur.

La figure 3A est une vue à plus grande échelle du détail A de la figure 3.

Les figures 4A et 4B sont des vues en coupe longitudinale de la partie inférieure et de la partie supérieure respectivement d'une sonde de contrôle ultrasonore et de son support.

La figure 5 est une vue en coupe d'une partie de la plaque tubulaire d'un générateur de vapeur sous laquelle est mis en place un guide-sonde d'un dispositif de contrôle suivant l'invention.

La figure 6 est une vue à grande échelle d'une soudure de liaison entre un manchon et un tube du générateur de vapeur.

La figure 7 est une vue en coupe du guide-sonde du dispositif suivant l'invention et d'un tube d'étalonnage de la sonde.

La figure 8 est une vue en coupe suivant 8-8 du tube d'étalonnage représenté sur la figure 7.

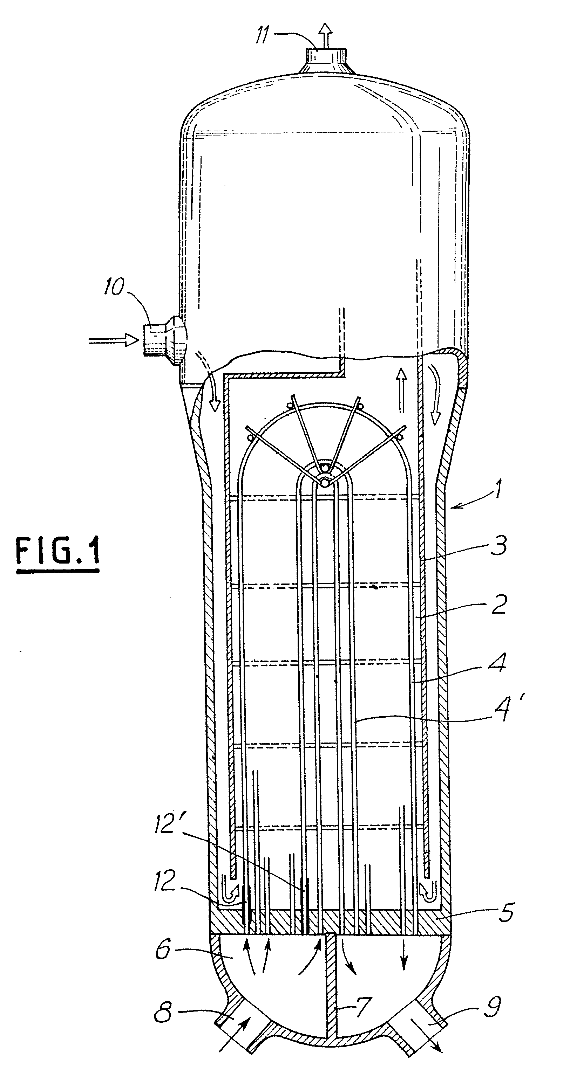

Sur la figure 1, on voit un générateur de vapeur d'un réacteur nucléaire à eau sous pression désigné de manière générale par le repère 1. Le générateur de vapeur 1 comporte un faisceau de tubes 2 placé dans une enveloppe de faisceau 3 dans la partie centrale du générateur de vapeur 1. Chacun des tubes 4 du faisceau plié en U à sa partie supérieure est fixé à ses extrémités dans une plaque tubulaire 5 séparant la partie du générateur de vapeur renfermant le faisceau 2 d'une boîte à eau 6 en deux parties séparées par une cloison 7.

Chacun des tubes du faisceau comporte une extrémité fixée dans un trou traversant la plaque tubulaire 5 d'un côté de la cloison 7 et son extrémité opposée fixée dans un trou traversant la plaque tubulaire 5 de l'autre côté de la cloison 7. L'eau de refroidissement du réacteur nucléaire sous pression pénètre par une tubulaire 8 dans l'un des compartiments de la boîte à eau 6 délimitée par la cloison 7 puis circule dans les tubes 4 du faisceau pour ressortir dans le second compartiment de la boîte à eau 6 comprenant une tubulure de sortie 9.

L'eau d'alimentation pénètre dans la partie supérieure du générateur de vapeur 1 par une tubulure 10, circule de haut en bas dans l'espace périphérique délimité par l'enveloppe de faisceau 3 à l'intérieur du générateur de vapeur, puis de bas en haut au contact du faisceau 2 à l'intérieur de l'enveloppe 3 pour ressortir sous forme de vapeur dans la partie supérieure du générateur de vapeur, l'eau d'alimentation s'étant échauffée et vaporisée au contact des tubes du faisceau dans lesquels circule l'eau de refroidissement sous pression du réacteur. La vapeur est évacuée par la tubulure 11 placée à l'extrémité supérieure du générateur de vapeur.

Les tubes 4 du faisceau sont soumis à une certaine usure et à une certaine corrosion pendant le fonctionnement du générateur de vapeur, si bien que ces tubes sont susceptibles de présenter des fuites au moins dans certaines zones, après un certain temps de fonctionnement du générateur de vapeur.

L'état de contrainte interne des tubes et l'intensité accrue de la corrosion dans la zone des tubes située au voisinage de la face supérieure de la plaque tubulaire 5 se traduisent par une présence plus fréquente des fissures et des fuites dans cette zone.

Afin de prolonger la durée de vie du générateur de vapeur, on est amené soit à effectuer le bouchage des extrémités des tubes présentant des fuites, soit à effectuer la réparation de ces tubes par manchonnage.

L'opération de manchonnage consiste à introduire un manchon dans un tube présentant une fuite, de façon à recouvrir la zone de fuite. Le manchon peut être serti par dudgeonnage à l'intérieur du tube, cette opération de sertissage étant suivie par un soudage du manchon sur le tube dans deux zones circulaires de part et d'autre de la zone de fuite. On obtient ainsi une parfaite étanchéité de la jonction entre le manchon et le tube, si bien que la séparation complète du fluide primaire et de l'eau d'alimentation est de nouveau assurée pour le tube considéré.

Sur la figure 1, on a représenté un manchon 12 assurant la réparation d'un tube du générateur de vapeur au voisinage de la face supérieure de la plaque tubulaire. Comme indiqué plus haut, il s'agit de la zone dans laquelle sont effectuées le plus souvent les réparations des tubes d'un générateur de vapeur.

Ce manchon 12 est placé à l'intérieur du tube de manière que son extrémité inférieur soit située à l'intérieur de la plaque tubulaire 5 et son extrémité supérieure au-dessus de la face supérieure de cette plaque tubulaire 5.

Dans le cas du manchon 12, le tube 4 est un tube périphérique du faisceau en-dessous duquel le dégagement dans la boîte à eau 6 de forme hémisphérique est limité. On utilise donc un manchon 12 d'une longueur limitée dont l'extrémité inférieure est placée à une certaine distance de la face d'entrée de la plaque tubulaire 5.

Dans le cas de tubes 4 situés vers la partie centrale du faisceau, on peut utiliser des manchons tels que 12' d'une plus grande longueur dont l'extrémité inférieure est au voisinage de la face d'entrée de la plaque tubulaire 5.

Dans tous les cas, il est nécessaire d'effectuer un sertissage des extrémités des manchons dans le tube suivi d'un soudage de ces manchons sur le tube, dans deux zones circulaires voisines de ses extrémités.

Ces opérations doivent être mises en oeuvre et commandées à distance depuis l'extérieur de la boîte à eau, ce qui nécessite l'utilisation de dispositifs spéciaux qui ont été conçus par la Société Demanderesse.

De tels outillages spéciaux sont décrits par exemple dans les brevets Français 86-06342 et 87-09872.

Lorsque le soudage du manchon a été effectué de part de d'autre de la zone de fuite du tube, l'étanchéité de ce tube constituant une barrière entre le fluide primaire et l'eau d'alimentation est en principe redevenue parfaite.

Cependant, la difficulté de mise en oeuvre de l'opération de soudage peut se traduire par une qualité inégale des soudures qui peuvent présenter des amorces de fissure, des irrégularités ou même des zones non étanches.

Il est donc souhaitable de disposer de moyens de contrôle des soudures circulaires effectuées dans le tube.

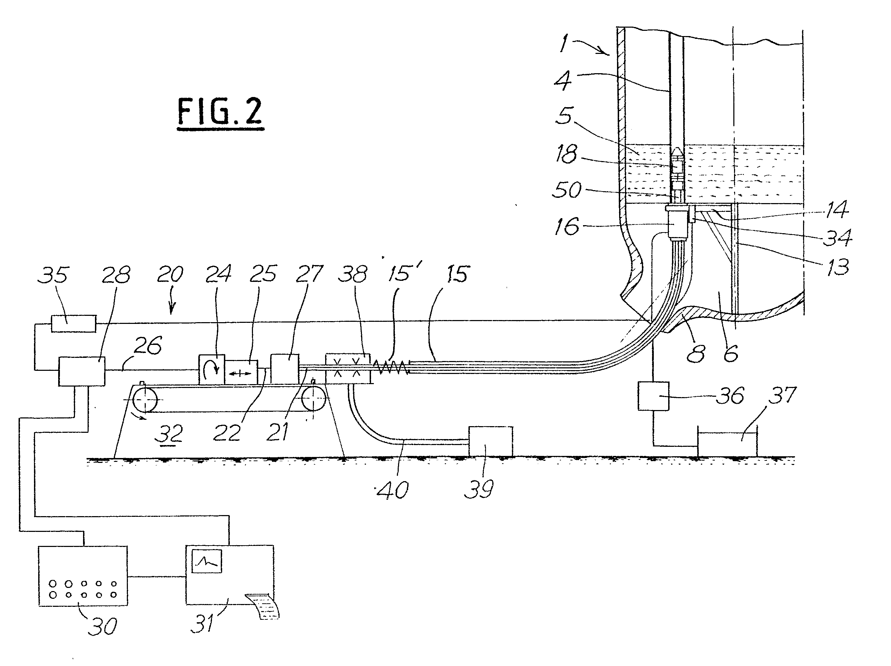

Sur la figure 2, on voit l'ensemble du dispositif suivant l'invention permettant d'effectuer le contrôle de zones circulaires soudées à l'intérieur d'un tube de générateur de vapeur.

Le dispositif a été représenté dans sa position de travail à l'intérieur d'un tube 4 d'un générateur de vapeur 1 dans lequel on a précédemment réalisé un manchonnage suivant le procédé décrit ci-dessus.

Pour la mise en oeuvre de l'opération de contrôle des soudures effectuées dans un tube 4 quelconque du faisceau, on utilise un moyen de manutention 13 disposé à l'intérieur de la boîte à eau 6 et comportant un bras 14 dont les déplacements sont télécommandés et qui peut venir placer un outillage dans le prolongement axial d'un tube quelconque du faisceau, en-dessous de la plaque tubulaire 5.

Un tel dispositif de manutention est bien connu de l'art antérieur et peut être fixé par une ou plusieurs colonnes disposées suivant la hauteur de la boîte à eau ou par des éléments de fixation à l'intérieur de tubes traversant la plaque tubulaire 5.

Le dispositif suivant l'invention comporte un conduit souple 15 dont une extrémité est solidaire d'un élément tubulaire 16 relié à l'extrémité du bras 14 du moyen de manutention 13 et qui constitue un élément de guidage pour une sonde de contrôle 18 qui doit être introduite dans le tube 4.

L'extrémité opposée du conduit souple 15 constituée d'un dispositif à ressort 15' se trouve à l'extérieur de la boîte à eau, au niveau d'un poste de contrôle et de commande 20.

Une gaine 21 est montée à l'intérieur du conduit 15 sur toute sa longueur et comporte une partie d'extrémité située à l'extérieur du conduit 15, au niveau du poste de contrôle et de commande 20.

Le dispositif comporte de plus un flexible 22 monté à l'intérieur de la gaine 21 et relié à son extrémité à un moteur 24 permettant sa mise en rotation autour de son axe, à l'intérieur de la gaine 21. Un codeur angulaire 25 disposé à la sortie du moteur 24 permet de déterminer et d'enregistrer les rotations effectuées par le flexible 22.

Le flexible 22 qui présente une forme tubulaire est traversé sur toute sa longueur par un câble coaxial 26 qui est relié à l'une de ses extrémités à la sonde 18 et à son autre extrémité à des modules de traitement 30 et 31 des informations données par la sonde, par l'intermédiaire d'un collecteur tournant 27 et d'un élément de raccordement électrique 28.

Le moteur 24, le codeur 25 et le collecteur tournant 27 sont disposés sur la partie mobile d'un dispositif 32 de déplacement axial de l'ensemble mobile à l'intérieur du conduit souple 15.

Le moyen de manutention 13 comporte un dispositif 34 assurant la montée et la descente du guide tubulaire 16 pour sa mise en contact avec l'extrémité d'un tube sur la face inférieure de la plaque tubulaire 5 ou son retrait. Le dispositif 34 est commandé par une électrovanne 35 placée, à l'extérieur de la boîte à eau, dans le poste de contrôle et de commande. La sonde de contrôle 18 est une sonde à ultrasons qui né-cessite la présence d'un liquide de couplage à l'intérieur du tube pendant son fonctionnement pour le contrôle des soudures.

De l'eau de couplage peut être envoyée par une pompe 36 alimentée par une capacité 37, à l'intérieur du tube 4, par l'intermédiaire de l'élément tubulaire 16, lorsque celui-ci est amené en contact avec l'extrémité du tube 4 par le dispositif de déplacement vertical 34.

Lorsque le contrôle dans le tube 4 est terminé, l'eau de couplage est récupérée par l'intermédiaire d'un dispositif récupérateur 38 fixé sur le conduit souple 15, communiquant avec le volume intérieur de ce conduit et relié à un aspirateur 39, par l'intermédiaire d'une canalisation 40.

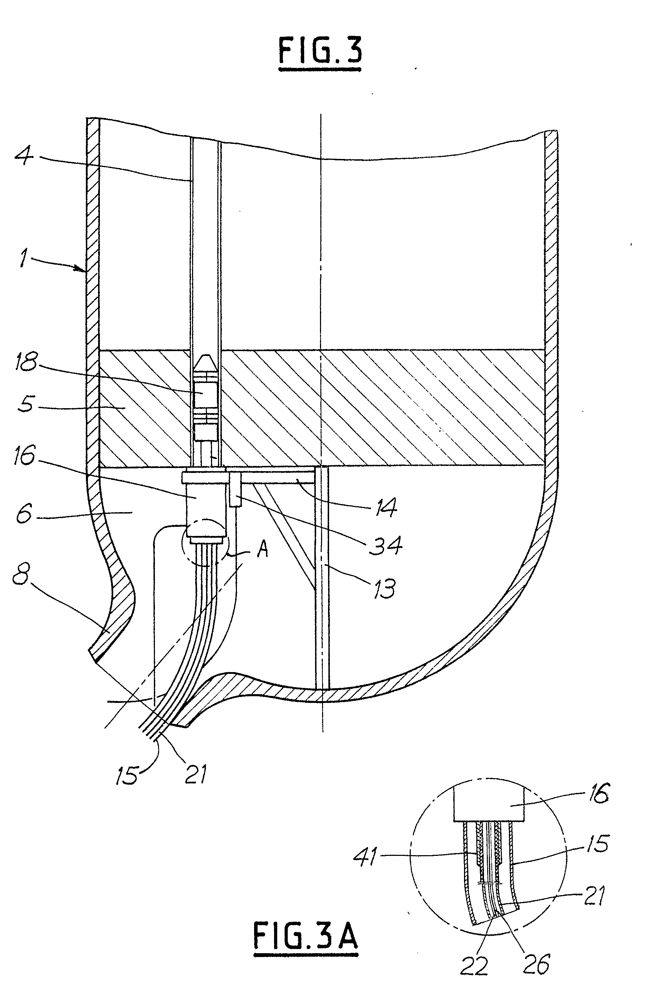

Sur les figures 3 et 3A, on voit que l'extrémité de la gaine 21 est solidaire d'une butée 41 de forme annulaire engagée partiellement à l'intérieur de l'élément tubulaire 16, lorsque le dispositif est en position de travail, comme représenté sur les figures 2, 3 et 3A.

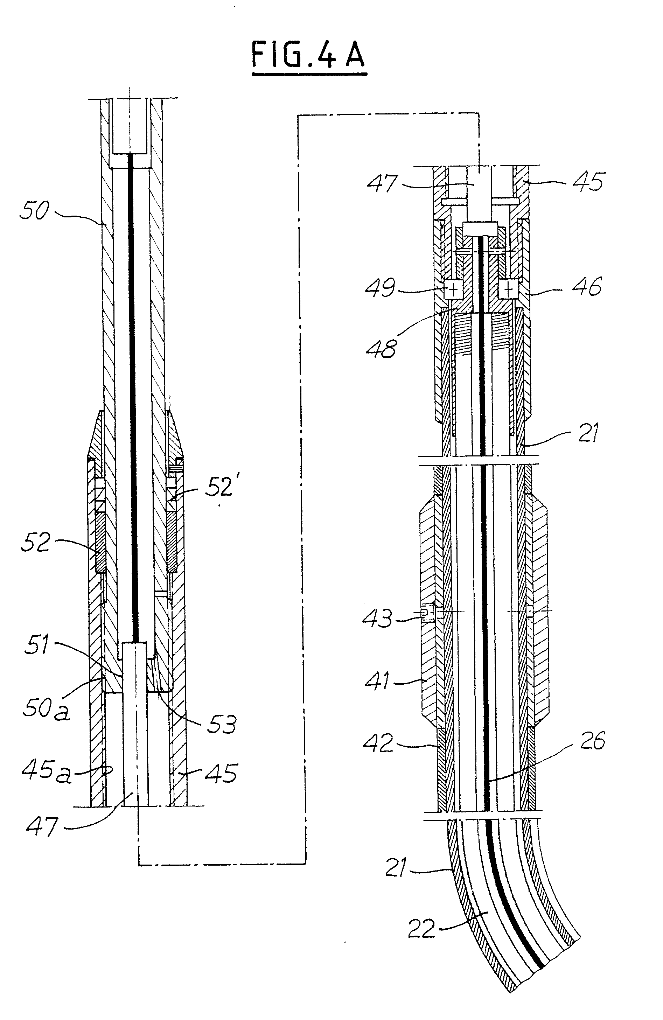

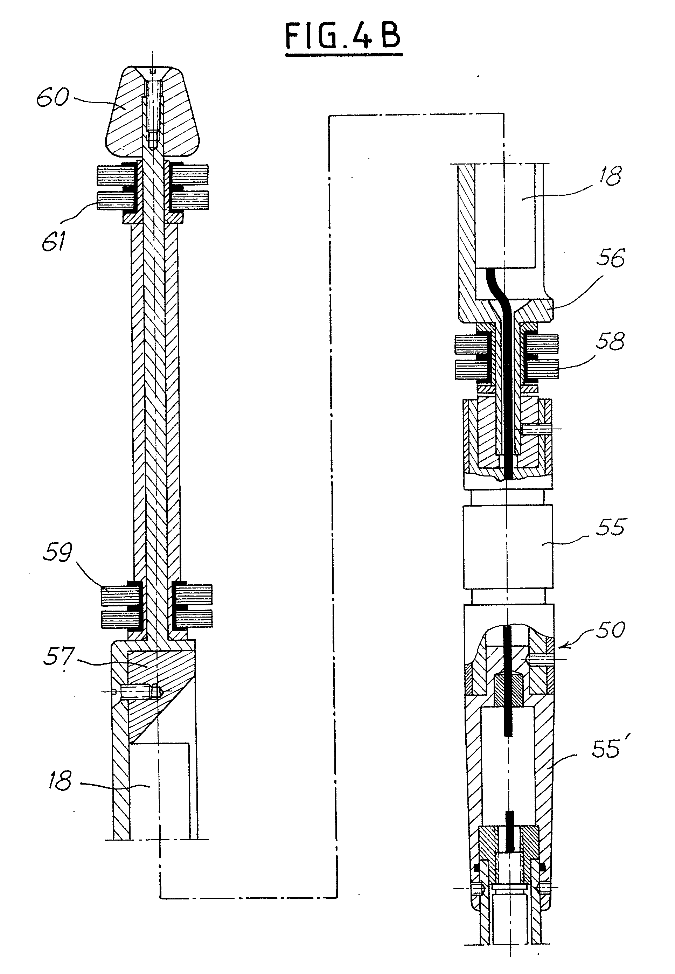

Sur la figure 4A, on voit la partie inférieure de l'ensemble à disposition coaxiale supportant la sonde 18 représentée sur la figure 4B.

Cet ensemble à structure coaxiale comporte, comme indiqué plus haut, la gaine 21, le flexible 22 et le câble coaxial 26. Cet ensemble passe à l'intérieur du conduit souple 15 pour assurer la jonction du poste de commande et de contrôle 20 avec la boîte à eau 6 du générateur de vapeur.

La gaine souple 21 est constituée par un tube en matière plastique qui peut être renforcé pour accroître ses propriétés mécaniques.

Le flexible 22 est constitué par une structure tubulaire métallique souple susceptible de transmettre un mouvement de rotation sur toute sa longueur, tout en ayant une très grande souplesse en flexion.

Le câble coaxial 26 est un simple câble de transmission de mesures de faible diamètre placé suivant l'axe de l'ensemble coaxial.

La butée 41 est constituée par une pièce annulaire solidaire d'une gaine 42 montée glissante sur la gaine 21 de façon à pouvoir régler la position de la butée 41. La position de cette butée peut être fixée par une vis 43 traversant la butée 41.

Comme il est visible sur les figures 3 et 3A, la butée 41 vient en appui, à l'intérieur de la pièce tubulaire 16 maintenue à l'entrée du tube 4 par le bras 14, sur une surface de butée correspondante déterminant la position de la sonde 18 à l'intérieur du tube 4.

On peut ainsi, suivant la position de la butée 41, fixer la position de la sonde 18 à l'intérieur du tube de façon à effectuer le contrôle de la soudure inférieure ou de la soudure supérieure d'un manchon fixé dans le tube 4, que ce manchon soit un manchon court tel que le manchon 12 représenté sur la figure 1 ou un manchon de longueur normale tel que le manchon 12'.

A l'extrémite de la gaine 21, au-dessus de la butée 41 est fixée une douille 45 par l'intermédiaire d'une pièce de raccordement 46 rigidement solidaire de l'extrémité de la gaine 21 et sur laquelle la douille 45 est fixée par vissage.

La douille 45 est taraudée sur une partie 45a de son alésage intérieur. Une partie d'extrémité filetée du support de sonde 50 est engagée par vissage dans la partie 45a de la douille 45.

Le flexible 22 est solidaire à son extrémité d'une pièce profilée 47 à section carrée disposée suivant l'axe de la douille 45. Le porte-sonde 50 de forme tubulaire est terminé à son extrémité inférieure filetée par un fond traversé par une lumière 51 à section carrée dans laquelle la pièce 45 est engagée à glissement.

De cette manière, lorsque le flexible 22 est mis en rotation autour de son axe par le moteur 24 disposé à l'extérieur de la boîte à eau, la pièce profilée 47 entraîne le support de sonde 50, à la fois en rotation autour de l'axe de la douille 45 et en translation suivant cet axe, la partie filetée 50a du support de sonde 50 constituant un écrou monté mobile dans la partie taraudée 45a de la douille 45.

Dans la partie supérieure de la douille 45 sont disposés deux joints à lèvres 52'. Une bague 52 assure le guidage.

Le fond inférieur du support de sonde est également traversé par un canal 53 disposé latéralement par rapport à la lumière 51.

En se reportant à la figure 4B, on voit que la partie inférieure du porte-sonde 50 est reliée par l'intermédiaire d'un joint de cardan 55 à la partie supérieure du porte-sonde de façon à faciliter la mise en place et l'orientation de cette partie supérieure du porte-sonde dans le tube 4 dans lequel on effectue le contrôle.

La partie supérieure du porte-sonde comporte un support 56 sur lequel est fixée la sonde proprement dite 18 et un miroir 57 dont la surface inclinée suivant un angle variable en fonction du type de soudure par rapport à l'axe de la douille 45 et du porte-sonde 50 permet de réfléchir, à l'aller et au retour, les ultrasons émis ou reçus par la sonde 18 constituée par un transducteur d'ultrasons.

De part et d'autre du support 56, le porte-sonde comporte des brosses annulaires 58 et 59 permettant de réaliser le guidage et le centrage du support 56 et de la sonde 18 dans le tube ou le manchon dans lequel est engagé le porte-sonde.

La partie d'extrémité du support de sonde 50 est constituée par une tête de guidage profilée 60 sous laquelle est placée une brosse de forme annulaire 61 assurant le centrage et le guidage de la partie supérieure du porte-sonde dans le tube 4.

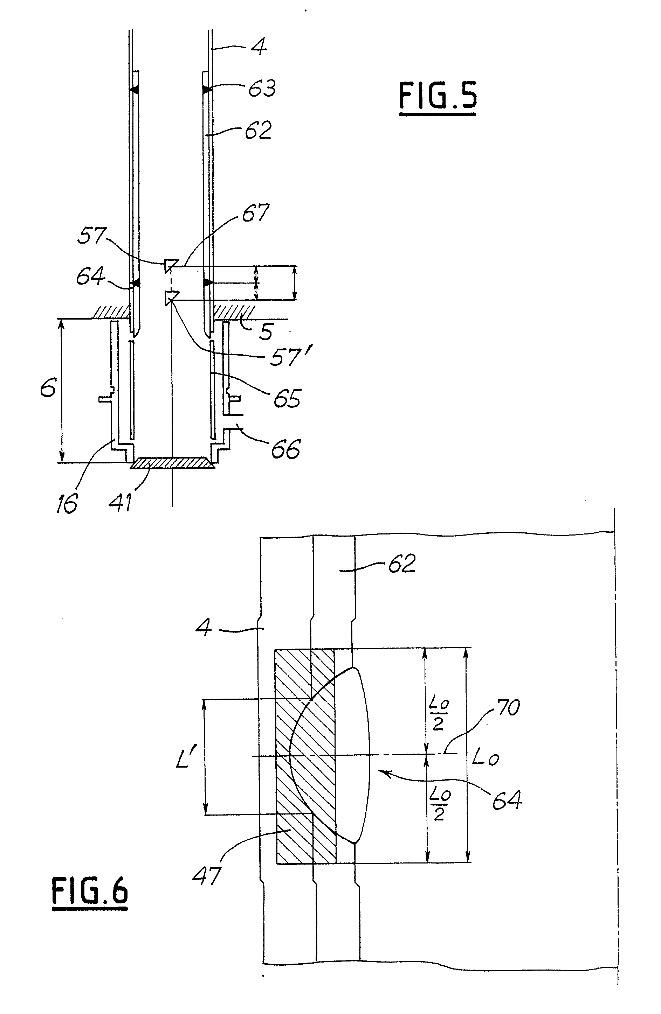

Sur la figure 5, on a représenté de manière schématique un manchon de réparation 62 fixé à l'intérieur d'un tube 4 du générateur de vapeur. La fixation du manchon 62 est complétée par des joints de soudure circulaires supérieur et inférieur respectivement 63 et 64 qui permettent d'obtenir une jonction étanche du manchon 62 et du tube 4.

On a représenté de manière schématique certains éléments du dispositif de contrôle qui a été décrit ci-dessus, dans la position qu'ils occupent pendant le contrôle de la soudure inférieure 64.

Le guide-sonde tubulaire 16 est maintenu en appui contre la face inférieure de la plaque tubulaire 5, grâce au moyen de manutention disposé dans la boîte à eau 6.

Une manchette d'étalonnage 65 est disposée à l'intérieur du guide-sonde 16 dans une position coaxiale par rapport au guide-sonde, au tube 4 et au manchon 62.

Un ajutage d'arrivée latérale d'eau 56 permet de réaliser la jonction entre le guide-sonde 16 et la conduite de sortie de la pompe 36.

La butée 41 fixée sur la gaine 21 de l'ensemble coaxial mobile à l'interieur du conduit 15 vient en appui sur une surface de butée située à l'entrée du guide-sonde tubulaire 16.

La position de la butée 41 à l'extrémité de la gaine 21 détermine la position de la sonde 18 et du miroir 57 assurant l'émission et le recueil d'un faisceau ultrasonore 67 dans la direction radiale en direction et en provenance de la paroi du manchon 62.

Le miroir 57 a été représenté dans deux positions extrêmes 57, 57' au cours du balayage de la zone du manchon correspondant à la zone de soudure 64.

Cette zone de soudure 64 est représentée à plus grande échelle sur la figure 6. Le contrôle de la soudure consiste à effectuer un balayage longitudinal de la zone de soudure sur une longueur L, de manière symétrique par rapport au plan médian 70 de la soudure annulaire 64.

Dans le cas des tubes de générateurs de vapeur de la technique actuelle, le balayage sera effectué sur une longueur L sensiblement égale à 24 mm, permettant d'assurer un balayage de 5 mm minimum de part et d'autre du plan médian 70 de la soudure.

Le faisceau d'ultrasons renvoyé radialement par le miroir 57 est réfléchi en particulier par l'interface entre le manchon 62 et le tube 4 pour revenir sur le miroir 57 et le transducteur 18. Le signal réfléchi par l'interface manchon-tube est enregistré à partir d'une porte synchronisée sur l'écho de surface puis est traité comparativement à un seuil déterminé. On vérifie ainsi la continuité de la soudure.

De plus, la longueur L' de la zone résistante de la soudure correspondant à l'intersection de la zone soudée 64 avec l'interface manchon-tube est mesurée, pendant le balayage par les ultrasons. Cette zone de longueur L' correspondant à la zone du manchon 62 liée métallurgiquement au tube 4 assure l'étanchéité de la liaison.

Dans le cas des tubes et des manchons utilisés dans la technique actuelle, la longueur de la zone soudée L0 prise en compte est sensiblement égale à 10 mm, cette zone s'étendant sur 5 mm de part et d'autre du plan médian 70.

On vérifiera que la zone L' présente une longueur au moins égale à 2 mm.

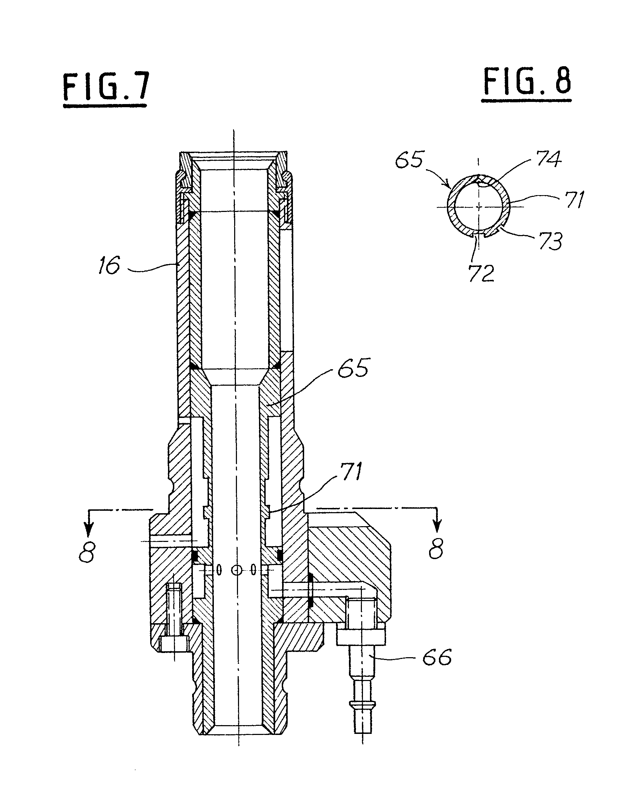

Sur les figures 7 et 8, on a représenté de façon plus détaillée le guide-sonde tubulaire 16 dont l'extrémité inférieure présente une surface d'appui de forme tronconique pour la butée 41 de l'ensemble mobile du dispositif de contrôle.

Cette surface tronconique est usinée à l'extrémité d'un tube étalon 65 fixé à l'intérieur du guide-sonde tubulaire 16.

Le tube étalon 65 comporte une partie annulaire d'essai 71 dont la section est visible sur la figure 8. Dans cette partie annulaire, le tube étalon présente des encoches 72 et 73 présentant des largeurs différentes dans la direction circonférentielle ainsi qu'une ouverture conique interne 74 d'angle 90° sur une partie de l'épaisseur du tube étalon 65.

Les encoches 72 et 73 et le cône 74 figurent des défauts de la zone soudée pour lesquels l'enregistrement du signal ultrasonore est effectué avant les opérations proprement dites de contrôle des soudures. Ces enregistrements sont effectués pour une position prédéterminée du dispositif 32. Pendant cette phase, l'étanchéité est assurée par les brosses annulaires 58.

L'étalonnage comme le contrôle proprement dit est effectué en utilisant de l'eau comme liquide couplant, cette eau étant introduite dans le guide-sonde tubulaire 16 en contact avec la face inférieure de la plaque tubulaire, par l'ajutage 66.

On va maintenant décrire, en se référant à l'ensemble des figures, une opération de contrôle d'une soudure d'étanchéité d'un manchon dans un tube 4 du générateur de vapeur.

Le moyen de manutention 13 dont le bras 14 porte à son extrémité le guide-sonde tubulaire 16 est en place dans la boîte à eau 6 du générateur de vapeur. Le bras 14 permet la mise en place du tube guide-sonde 16 à la verticale d'un tube 4, de manière que l'extrémité du guide-sonde vienne en appui sur la face inférieure de la plaque tubulaire.

On réalise le réglage de la butée 21 pour placer la sonde 18 et son miroir 57 dans une zone permettant le contrôle de l'une des soudures du manchon 62, par exemple la soudure inférieure 64, comme expliqué plus haut.

L'ensemble mobile coaxial de contrôle est introduit dans le conduit souple 15 par son extrémité extérieure à la boîte à eau 6. La sonde vient se mettre en place, dans un premier temps, au niveau de la partie d'essai du tube étalon, dans le guide-sonde 16.

De l'eau de couplage est introduite dans le guide-sonde par la pompe 36 et l'ajutage 46.

La mise en place de l'ensemble mobile coaxial dans le conduit 15 est effectuée par le dispositif de déplacement 32 exerçant une poussée sur l'extrémité de la gaine 21.

La mise en rotation de la sonde est assurée par le moteur 24, par l'intermédiaire du flexible 22 monté à l'intérieur de la gaine 21.

Le signal correspondant aux entailles 72 et 73 et au trou conique 74 du tube étalon 65 est enregistré comme élément de référence.

L'ensemble mobile coaxial est ensuite déplacé jusqu'au moment où la butée 21 vient en appui sur la partie d'extrémité du tube étalon 65. Les déplacements sont effectués comme précédemment par le dispositif 32. Le dispositif à ressort 15' permet d'assurer le positionnement de la butée 41 sur le guide sonde 16 et ainsi l'étanchéité pour le liquide de couplage.

Le réglage de la butée 41 est tel que la sonde 18 et son miroir 57 sont alors dans la zone de la soudure 64.

Le moteur 24 est mis en fonctionnement et met en rotation le flexible 22 dans un sens permettant la montée du porte-sonde 50 à l'intérieur de la douille filetée 45, jusqu'à son point le plus haut. Le moteur s'arrête alors, la sonde et son miroir étant dans la position haute correspondant à l'extrémité supérieure de la zone à contrôler au voisinage de la soudure 64.

Parallèlement, l'eau de couplage est introduite dans le guide sonde 16 et ainsi dans le tube 4. Lorsque le niveau atteint le miroir 57, un écho est alors réfléchi par la surface du manchon 62. Un signal commande alors l'arrêt de la pompe 36. L'eau constitue le liquide de couplage lors du contrôle ultrasonore.

Le moteur 24 est alors mis en rotation dans le sens inverse du sens précédent pour effectuer à vitesse contrôlée un déplacement hélicoïdal du porte-sonde et de la sonde 18 à l'intérieur du manchon, sur une longueur L égale à 24 mm.

Le sonde ultrasonore tourne à 2,7 tours par seconde et décrit un mouvement hélicoïdal dont le pas est de 0,4 mm.

Les signaux sont recueillis par le câble coaxial 26 et traités par les unités 30 et 31.

Lorsque le contrôle à l'intérieur d'un tube 4 est terminé, l'eau de couplage est récupérée par l'intermédiaire du conduit souple 15, du dispositif 38, du conduit 40 et de l'aspirateur 39.

L'ensemble mobile coaxial et la sonde 18 sont tirés à l'intérieur du conduit souple 15 par l'intermédiaire du dispositif de déplacement 32 et la bras 14 du moyen de manutention 13 est mis en vis-à-vis du tube suivant à contrôler.

Les opérations peuvent se poursuivre comme décrit ci-dessus.

Le dispositif suivant l'invention permet donc de réaliser un contrôle trés précis des soudures d'étanchéité d'un manchon dans un tube de générateur de vapeur, par un déplacement de la sonde suivant un mouvement hélicoïdal permettant un balayage de toute la zone de soudure sur une hauteur parfaitement déterminée.

Il est à remarquer que le contrôle est toujours effectué lors d'un déplacement de la sonde dans le même sens, c'est-à-dire de haut en bas.

La mise en place de la sonde dans le tube est d'autre part très facile à réaliser grâce au conduit souple de guidage 15 et à la butée 41 coopérant avec le guide-sonde tubulaire 16.

En outre, les déplacements longitudinaux et en rotation de la sonde sont obtenus sans difficulté de manière très précise en utilisant un seul moteur à deux sens de rotation disposé à l'extérieur de la boîte à eau.

L'invention ne se limite pas au mode de réalisation qui a été décrit.

C'est ainsi qu'on peut imaginer d'autres moyens de déplacement de la sonde et de l'ensemble coaxial mobile que ceux qui ont été décrits et d'autres moyens pour introduire et récupérer le liquide de couplage dans la zone du tube à contrôler.

La sonde de l'exemple de réalisation décrit peut être remplacée par un ensemble de détection comportant plusieurs sondes à ultrasons reliées chacune à un câble coaxial.

Les moyens de traitement du signal de la sonde peuvent être d'un type quelconque et comporter tout type de moyen d'affichage ou d'enregistrement à l'intérieur du poste de contrôle 20.

Enfin, le dispositif suivant l'invention s'applique au contrôle non destructif de toute soudure circulaire à l'intérieur d'un tube d'un générateur de vapeur de réacteur nucléaire à eau sous pression et à tout autre type de contrôle sur une zone donnée ; seule la tête de sonde représentée sur la figure 4B doit alors être changée au niveau du connecteur 55′, et le mode de traitement adapté.

## Revendications

1.- Dispositif de contrôle non destructif par ultrasons d'une soudure circulaire (63, 64) à l'intérieur d'un tube de générateur de vapeur (4) d'un réacteur nucléaire à eau sous pression comportant un faisceau de tubes (2) dont les extrémités sont serties dans des trous traversant une plaque tubulaire (5) ayant une face d'entrée sur laquelle affleurent les extrémités des tubes (4) et constituant une paroi d'une boîte à eau (6) recevant l'eau de refroidissement du réacteur, le contrôle étant effectué en utilisant un moyen de détection comportant au moins une sonde à ultrasons (18) introduite dans le tube depuis la boîte à eau grâce à un moyen de manutention (13, 14) disposé dans la boîte à eau et permettant de placer la sonde dans un tube quelconque du faisceau, caractérisé par le fait qu'il comporte :
- un conduit souple (15) ayant une de ses extrémités dans une zone (20) située à l'extérieur de la boîte à eau (6) et son autre extrémité reliée à un guide-sonde (16) tubulaire porté par le moyen de manutention (13),
-une gaine (21) montée à l'intérieur du conduit souple (15) de manière glissante, portant à l'une de ses extrémités, une butée (41) et une douille (45) de guidage de la sonde et ayant son autre extrémité, à l'extérieur de la boîte à eau (6), ressortant par l'extrémité du conduit souple (15),
- un flexible (22) monté rotatif autour de son axe à l'intérieur de la gaine (21) solidaire à l'une de ses extrémités d'une pièce profilée (47) d'entraînement en rotation et relié à son autre extrémité, à l'extérieur de la boîte à eau (6), à un moyen (24) d'entraînement en rotation autour de son axe,
- un support de sonde (50) comportant une partie filetée (50a) engagée dans une partie taraudée (45a) de la douille de guidage (45) et une lumière (51) d'une forme correspondant à la section profilée de la pièce (47), pour l'entraînement du support de sonde (50) en rotation et en translation axiale, par mise en rotation du flexible (22).
et des moyens (36, 37, 38, 39, 40) d'alimentation en liquide de couplage, de la zone du tube à contrôler et de récupération du liquide de couplage.

2.- Dispositif de contrôle suivant la revendication 1, caractérisé par le fait que la butée (41) a une position réglable suivant la direction axiale de la gaine (21).

3.- Dispositif de contrôle suivant l'une quelconque des revendications 1 et 2, caractérisé par le fait que le guide-sonde tubulaire (16) comporte une surface d'appui pour la butée (41) fixée sur la gaine (21).

4.- Dispositif de contrôle suivant l'une quelconque des revendications 1 à 3, caractérisé par le fait que le guide-sonde tubulaire (16) renferme un tube (65) d'étalonnage de la sonde (18).

5.- Dispositif suivant l'une quelconque des revendications 1 à 4, caractérisé par le fait que le support de sonde (50) comporte au moins deux parties successives dans la direction axiale reliées par une articulation universelle (55).

6.- Dispositif suivant l'une quelconque des revendications 1 à 5, caractérisé par le fait que l'ensemble coaxial constitué par la gaine (21) portant à son extrémité la sonde (18), le flexible (22) et au moins un câble coaxial (26) de transmission des signaux du moyen de détection disposé à la partie cen trale du flexible (22) est relié à son extrémité située à l'extérieur de la boîte à eau (6) à un dispositif de déplacement axial (32) par glissement à l'intérieur du conduit (15) lui-même solidaire d'un dispositif à ressort 15'.

FIG.1

EP 0 354 090 A2

**FIG.2**

# FIG.3

# FIG.3 A

# FIG.4 A

# FIG. 4 B

FIG.5

FIG.6

# FIG.7

# FIG.8

16

65

71

8

8

65

74

71

73

72

66